# EUROPÄISCHE PATENTSCHRIFT

(11) **EP 2 912 934 B1**
(45) Veröffentlichungstag und Bekanntmachung des Hinweises auf die Patenterteilung: **22.08.2018**
(21) Anmeldenummer: 15401013.6
(22) Anmeldetag: 25.02.2015
(51) Int. Cl.: A01C 17/00

(54) **Streuvorrichtung und Verfahren zur Erfassung eines Massenstroms in einer Streuvorrichtung**
Distribution device and method for detecting a mass flow in a distribution device
Dispositif d'épandage et procédé de détection d'un flux de matière dans un dispositif d'épandage

(30) Priorität: 28.02.2014 DE 102014102645
(43) Veröffentlichungstag der Anmeldung: 02.09.2015
(73) Patentinhaber: Amazonen-Werke H. Dreyer GmbH & Co. KG, 49205 Hasbergen (DE)
(72) Erfinder: Dreyer, Justus, 49076 Osnabrück (DE)

(56) Entgegenhaltungen:
- EP-A1- 0 963 690
- DE-A1- 4 417 549
- DE-A1- 19 908 141

## Beschreibung

Die vorliegende Erfindung betrifft eine Streuvorrichtung und ein Verfahren zum Erfassen eines Massenstroms in einer Streuvorrichtung. Insbesondere betrifft die vorliegende Erfindung eine Streuvorrichtung und ein Verfahren, wobei ein Massenstrom auf Grundlage eines erfassten Drehmoments einer Streuscheibe und einer Korrekturgröße korrigiert wird.

In der Landwirtschaft werden sehr große Mengen Mineraldünger ausgebracht, um das Nährstoffangebot für Kulturpflanzen zu ergänzen. Durch gezielte Düngergaben können für Kulturpflanzen schnelleres Wachstum, höhere Erträge und verbesserte Qualitäten erzielt werden, da die benötigten Grundnährstoffe und Spurennährstoffe oftmals im kultivierten Boden nicht in erwünschter Form und Menge bereitstehen. Gerade um einen steigenden Bedarf von Nahrungsmitteln zu begegnen werden im Agrarbereich Düngemittel eingesetzt, um der erforderlichen Steigerung von Erntemengen nachzukommen. Der optimale Einsatz von Düngemitteln ist jedoch nicht nur hinsichtlich der mit Düngemitteln verbundenen Kosten wichtig, sondern auch angesichts der möglichen Gefahren von Belastungen für die Bodenfauna und das Grundwassers bei falscher Düngung notwendig. Zur wirksamen Ertragssteigerung ist es daher unumgänglich, die meist kostenintensiven Düngemittel so zu verteilen, dass sie von den Pflanzen optimal genutzt werden können, ohne eine Gefahr für die Umwelt darzustellen.

Für die Ausbringung der Mineraldünger sind im Laufe der Zeit die verschiedenartigsten Verteiltechniken entwickelt worden. Hierbei haben sich insbesondere die Zentrifugaldüngerstreuer durchgesetzt. In entsprechenden bekannten Streuvorrichtungen wird einer rotierenden Streuscheibe ein dosierter Massenstrom zugeführt, der durch Streuschaufeln ausgebracht wird, die auf der Streuscheibe angeordnet sind.

Damit die auszubringenden Düngemittel möglichst zielgenau verteilt werden können sind an einer Streuvorrichtung vorab Einstellungen vorzunehmen, die auf die als Streugut auszubringende Düngersorte abgestellt sind und die gewünschte Arbeitsbreite festlegen. Im Allgemeinen schwanken die Stoffeigenschaften und die Streueigenschaften für verschiedene Düngemittel sehr stark, so dass die Einsteilungen für jede auszubringenden Düngersorte einzeln zu korrigieren sind. Oftmals sind die Veränderungen in den Stoffeigenschaften für den Landwirt jedoch nicht ohne weiteres erkennbar.

Für eine ideale Ausbringung von Düngemitteln ist es ferner erforderlich, die ausgebrachte Menge an Düngemittel genau zu kennen, insbesondere den von einer Streuvorrichtung ausgebrachten Massenstrom genau zu erfassen. In herkömmlichen Schleudervorrichtungen wird der Massenstrom anhand des Drehmoments der Streuscheibe bestimmt. Dabei wird anhand einer vorab gemessenen Massenstrom-Drehmoment-Kennlinie zu einem gemessenen Drehmoment der Streuscheibe der entsprechende Massenstrom bestimmt. Ein entsprechender Schleuderstreuer ist aus Dokument EP 0 963 690 B1 und aus DE 44 17 549 A1 bekannt.

In diesen herkömmlichen Schleuderstreuern werden jedoch keine stoffabhängigen Eigenschaften unterschiedlicher Arten von Düngemitteln berücksichtigt, so dass bei Verwendung unterschiedlicher Arten von Düngemitteln in der Bestimmung des Massenstroms Fehler auftreten. Auch ist es möglich, dass sich mechanische Eigenschaften einer gelagerten Düngemittelsorte mit der Zeit verändern, z.B. kann die Festigkeit von Partikeln einer gelagerten Düngemittelsorte aufgrund von Feuchtigkeit abnehmen. Die Folge ist ebenfalls eine fehlerhafte Bestimmung des Massenstroms.

Ausgehend von dem vorangehend dargestellten Stand der Technik ist es eine Aufgabe, eine Streuvorrichtung und ein Verfahren bereitzustellen, das die oben genannten Probleme vermeidet.

Die vorliegende Erfindung schlägt als Lösung eine Streuvorrichtung und ein Verfahren zum Erfassen eines Massenstroms in einer Streuvorrichtung vor, wobei ein korrigierter Massenstrom auf Grundlage einer Korrekturgröße und eines erfassten Drehmoments bestimmt ist.

In einem Aspekt der vorliegenden Erfindung wird ein Verfahren zum Erfassen eines Massenstroms in einer Streuvorrichtung mit einer Streuscheibe zum Verteilen von der Streuscheibe zugeführtem Material bereitgestellt. In beispielhaften Ausführungsformen umfasst das Verfahren ein Antreiben der wenigstens einen Streuscheibe, so dass diese um eine Drehachse rotiert, ein Zuführen des Materials zu der wenigstens einen rotierenden Streuscheibe, ein Erfassen eines zum Antrieb der wenigstens einen rotierenden Streuscheibe erforderlichen Drehmoments und ein Bestimmen eines korrigierten Massenstroms des der Streuscheibe zugeführten Materials auf Grundlage der Korrekturgröße und des erfassten Drehmoments. Die Korrekturgröße kann dabei auf einem Reibkoeffizienten des Materials auf der Streuscheibe und/oder einer Verweildauer des Materials auf der Streuscheibe und/oder einem Abwurfwinkel des Materials relativ zu einer Zuführrichtung, entlang welcher der Materialstrom der Streuscheibe zugeführt wird, und/oder einer Abwurfrichtung des Materials basieren. Durch die Korrekturgröße wird hierbei eine Bestimmung eines korrigierten Massenstroms erreicht, wobei Reibungseinflüsse auf die Bestimmung des Massenstroms, die von der verwendeten Düngemittelsorte abhängen, berücksichtigt werden. Es ist also eine genauere Bestimmung der ausgebrachten Masse möglich, ohne dass für unterschiedliche Düngemittelsorten unter verschiedenen Bedingungen Drehmoment-Massenstrom-Beziehungen zu ermitteln sind.

In einer weiteren vorteilhafteren Ausgestaltung hierin kann das Bestimmen des korrigierten Massenstroms ein Bestimmen eines korrigierten Drehmoments auf Grundlage der Korrekturgröße und ein Bestimmen des korrigierten Massenstroms aus dem korrigierten Drehmoment mittels einer bekannten Massenstrom-Drehmoment-Beziehung umfassen. Hierbei können Einflüsse berücksichtigt werden, die sich auf das Drehmoment auswirken, ohne dass neue Drehmoment-Massenstrom-Beziehungen vorab aufgenommen werden müssen. Es wird somit eine genaue Massenbestimmung ermöglicht.

In einer anderen vorteilhafteren Ausgestaltung hierin kann das Bestimmen des korrigierten Massenstroms ein Bestimmen eines Massenstromwerts aus einer bekannten Massenstrom-Drehmoment-Beziehung auf Grundlage des erfassten Drehmoments und ein Korrigieren des Massenstromwerts auf Grundlage der Korrekturgröße umfassen. Hierbei kann eine Korrektur unter Berücksichtigung verschiedener Einflüsse auf eine einfache Weise erfolgen.

In einigen vorteilhaften Ausgestaltungen kann das Verfahren ferner ein Bestimmen eines Korrekturfaktors aus der Korrekturgröße in Abhängigkeit von dem Radius der Streuscheibe und/oder einem Trägheitsmoment der Streuscheibe und/oder einer Drehzahl der Streuscheibe und/oder einem Querschnitt des der Streuscheibe zugeführten Materialstroms umfassen, wobei der korrigierte Massenstrom auf Grundlage des Korrekturfaktors bestimmt wird. Abhängig von Streuscheibenparametern kann anhand eines Korrekturfaktors eine einfache Korrektur bereitgestellt werden, die unterschiedliche Scheibenkonfigurationen berücksichtigt.

In einigen vorteilhaften Ausgestaltungen kann das Bestimmen der Korrekturgröße ein Erfassen des Reibkoeffizienten und/oder des Abwurfwinkels und/oder der Abwurfrichtung mittels eines Schallsensors und/oder eines Lichtsensors und/oder eines Kraftsensors und/oder einer Videokamera und/oder einer Radarsensorvorrichtung umfassen. Hierbei kann die Korrekturgröße auf eine einfache Weise bestimmt werden.

In einigen vorteilhaften Ausgestaltungen kann das Bestimmen der Korrekturgröße ein Auswählen des Reibkoeffizienten aus einer oder mehreren hinterlegten Datenbanken, Tabellen, Erfahrungswerten oder Kennlinien umfassen. Damit wird eine einfache Korrektur des Massenstroms auf Basis hinterlegter Daten des Reibkoeffizienten ermöglicht.

In einigen vorteilhaften Ausgestaltungen kann die Streuscheibe ferner wenigstens eine Streuschaufel aufweisen, die mit Bezug auf die Drehachse außerradial angeordnet ist. Bei Streuscheiben mit wenigstens einer außerradial angeordneten Streuschaufel kann unabhängig vom Reibverhalten des Materials eine genaue Massenbestimmung erfolgen.

In einem anderen Aspekt der vorliegenden Erfindung wird eine Streuvorrichtung bereitgestellt. In anschaulichen Ausgestaltungen kann die Streuvorrichtung wenigstens eine Streuscheibe, die zur Drehung um eine Drehachse konfiguriert ist, um der Streuscheibe zugeführtes Material in einem Abwurfwinkelbereich auszubringen, eine Drehmomenterfassungsvorrichtung, die zum Erfassen eines Drehmoments konfiguriert ist, das zum Antrieb der wenigstens einen Streuscheibe dieser zugeführt wird, eine Sensorvorrichtung, die zum Erfassen von einer Korrekturgröße konfiguriert ist, und eine elektronische Auswertungseinheit umfassen, die zum Bestimmen eines korrigierten Massenstroms des der Streuscheibe zugeführten Materials auf Grundlage der Korrekturgröße und des von der Drehmomenterfassungsvorrichtung erfassten Drehmoments konfiguriert ist. Dabei kann die Korrekturgröße auf einem Reibkoeffizienten des Materials auf der Streuscheibe und/oder einer Verweildauer des Materials auf der Streuscheibe und/oder einem Abwurfwinkel des Materials relativ zu einer Zuführrichtung, entlang welcher der Streuscheibe der Materialstrom zugeführt wird, und/oder einer Abwurfrichtung des Materials basieren. Durch die Korrekturgröße wird hierbei eine Bestimmung eines korrigierten Massenstroms erreicht, wobei Reibungsabhängige Einflüsse auf die Bestimmung des Massenstroms, die von der verwendeten Düngemittelsorte abhängen, berücksichtigt werden. Es ist also eine genauere Bestimmung der ausgebrachten Masse möglich, ohne dass für unterschiedliche Düngemittelsorten unter verschiedenen Bedingungen Drehmoment-Massenstrom-Beziehungen zu ermitteln sind.

In einer vorteilhafteren Ausgestaltung hierin kann die elektronische Auswertungseinheit zum Bestimmen eines korrigierten Drehmoments auf Grundlage der Korrekturgröße und zum Zugriff auf eine bekannte Massenstrom-Drehmoment-Beziehung konfiguriert sein, um den korrigierten Massenstroms auf Grundlage des korrigierten Drehmoments mittels der bekannten Massenstrom-Drehmoment-Beziehung zu bestimmen. Hierbei können durch die Auswertungseinheit Einflüsse berücksichtigt werden, die sich auf das Drehmoment auswirken, ohne dass neue Drehmoment-Massenstrom-Beziehungen vorab aufgenommen werden müssen. Es wird somit eine genaue Massenbestimmung ermöglicht.

In einer anderen vorteilhafteren Ausgestaltung hierin kann die elektronische Auswertungseinheit ferner zum Zugriff auf eine bekannte Massenstrom-Drehmoment-Beziehung, zum Bestimmen des korrigierten Massenstroms mittels eines Bestimmens eines Massenstromwerts auf Grundlage der bekannten Massenstrom-Drehmoment-Beziehung und des erfassten Drehmoments und zum Korrigieren des Massenstromwerts auf Grundlage der Korrekturgröße konfiguriert sein. Hierbei kann durch die Auswertungseinheit auf eine einfache Weise eine Korrektur unter Berücksichtigung verschiedener Einflüsse erfolgen.

In einigen vorteilhaften Ausgestaltungen kann die elektronische Auswertungseinheit ferner zum Bestimmen eines Korrekturfaktors aus der Korrekturgröße in Abhängigkeit von dem Radius der Streuscheibe und/oder einem Trägheitsmoment der Streuscheibe und/oder der Drehzahl der Streuscheibe und/oder einem Querschnitt des der Streuscheibe zugeführten Materialstroms konfiguriert sein, um den korrigierten Massenstrom auf Grundlage des Korrekturfaktors zu bestimmen. Abhängig von Streuscheibenparametern kann die Auswertungseinheit anhand eines Korrekturfaktors eine einfache Korrektur ermöglichen, in der auch unterschiedliche Scheibenkonfigurationen berücksichtigt sind.

In einigen vorteilhaften Ausgestaltungen kann die elektronische Auswertungseinheit ferner einen Speicher mit einer oder mehreren darin hinterlegten Datenbanken, Tabellen, Erfahrungswerten oder Kennlinien zum Bestimmen der Korrekturgröße auf Grundlage des Reibkoeffizienten umfassen. Damit ermöglicht die Streuvorrichtung eine einfache Korrektur des Massenstroms auf Basis von im Speicher der Auswertungseinheit hinterlegten Daten des Reibkoeffizienten.

In einigen vorteilhaften Ausgestaltungen kann die Sensorvorrichtung wenigstens einen Schallsensor und/oder einen Lichtsensor und/oder einen Kraftsensor und/oder eine Videokamera und/oder eine Radarsensorvorrichtung umfassen. Hierbei kann Sensorvorrichtung eine einfache Bestimmung der Korrekturgröße ermöglichen.

In einigen vorteilhaften Ausgestaltungen kann die Streuscheibe wenigstens eine Streuschaufel aufweisen, die mit Bezug auf die Drehachse außerradial angeordnet ist.

Weitere Merkmale, vorteilhafte Ausführungsformen und Vorteile der vorliegenden Erfindung gehen aus den beigefügten Patentansprüchen und der folgenden detaillierten Beschreibung anschaulicher Ausführungsformen hervor, wobei auf die folgenden Figuren Bezug genommen wird.
- Fig. 1: zeigt schematisch eine Streuvorrichtung gemäß einigen anschaulichen Ausführungsformen der vorliegenden Erfindung;
- Fig. 2: zeigt schematisch eine Aufsicht auf eine Streuscheibe gemäß einigen anschaulichen Ausführungsformen der vorliegenden Erfindung;
- Fig. 3: zeigt schematisch eine Prinzipskizze eines Ausschnitts einer Streuscheibe in Vergrößerung während des Betriebs in Aufsicht gemäß beispielhafter Ausführungsformen der vorliegenden Erfindung;
- Fig. 4: zeigt schematisch ein Ablaufdiagramm zur Bestimmung eines korrigierten Massenstroms gemäß einigen anschaulichen Ausführungsformen der Erfindung; und
- Fig. 5: zeigt schematisch ein weiteres Ablaufdiagramm zur Bestimmung eines korrigierten Massenstroms gemäß anderen anschaulichen Ausführungsformen der Erfindung.

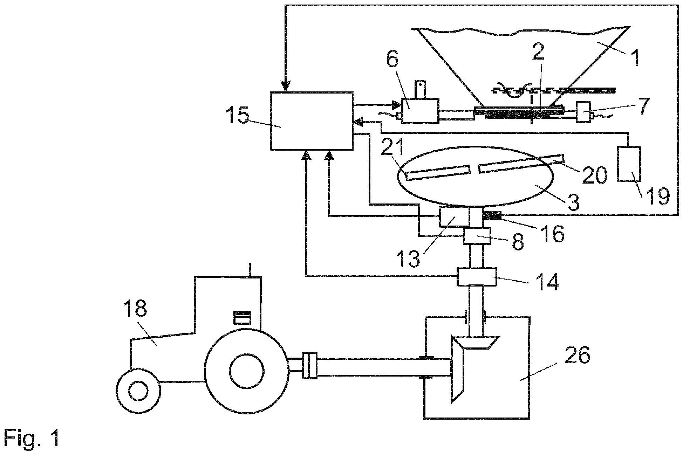

Fig. 1 stellt schematisch eine Streuvorrichtung zum Ausbringen von Streugut, beispielsweise Düngemittel, gemäß verschiedener beispielhafter Ausführungsformen der Erfindung dar. Die Streuvorrichtung gemäß Fig. 1 weist dabei einen Vorratsbehälter 1 mit zumindest einer Dosiervorrichtung 2 auf, über die auszubringendes Material in einstellbaren Mengen einer rotierend angetriebenen Streuscheibe 3 zugeführt wird. Obwohl in Fig. 1 nur eine Streuscheibe 3 dargestellt ist, kann die Streuvorrichtung alternativ zwei oder mehr Streuscheiben aufweisen. Die Streuscheibe 3 und die Dosiervorrichtung 2 können zueinander verstellbar sein, so dass die Lage des Aufgabepunktes des Streuguts auf die Streuscheibe 3 verändert werden kann. Hierzu können motorische Einstellmittel 6 zur Einstellung der Dosiervorrichtung 2 und/oder motorische Einstellelemente 7 zur Einstellung des Aufgabepunktes vorgesehen sein. Weiterhin sind Streuschaufeln 20, 21 auf der Streuscheibe 3 angeordnet sein, um Streugut auszubringen, das der rotierend angetriebenen Streuscheibe 3 zugeführt wird. Obwohl darstellungsgemäß zwei Streuschaufeln 20, 21 auf der Streuscheibe 3 angeordnet sind, können alternativ eine Streuschaufel oder mehr als zwei Streuschaufeln vorgesehen sein.

Der Antrieb der Streuscheibe 3 kann beispielsweise durch die Zapfwelle eines Traktors 18 über ein Getriebe 26 erfolgen. Alternativ kann die Streuscheibe 3 durch einen Hydraulikmotor (nicht dargestellt) oder über geeignete Einrichtungen angetrieben werden, wie z.B. durch die Hydraulikanlage eines Schleppers oder eine Hydraulikpumpe, die von dem Schlepper oder mit anderen Mitteln motorisch angetrieben wird. Dem Antrieb der Streuscheibe 3 kann eine Regeleinrichtung (nicht dargestellt) zugeordnet sein, mittels der eine Drehzahl der Streuscheibe 3 eingestellt werden kann.

Ferner kann ein Drehzahlsensor 14 vorgesehen sein, um die Drehzahl der Streuscheibe 3 zu erfassen. Ein zum Antrieb der Streuscheibe 3 zugeführtes Drehmoment kann über einen Drehmomentsensor 8 erfasst werden. Ferner kann ein Drehwinkelsensor 16 vorgesehen sein, mittels welchem der Drehwinkel der Schleuderscheibe 3 ermittelbar ist.

Ferner ist eine Auswertungseinheit 15 vorgesehen, wie in Fig. 1 dargestellt ist, wobei die Auswertungseinheit 15 auch Regelfunktionen der Streuscheibe 3 und des Dosiersystems 6, 7 ausführen kann. Die Auswertungseinheit 15 weist fernern einen Speicher (nicht dargestellt) auf, in dem Daten hinsichtlich der Streuvorrichtung und/oder eines auszuführenden Streuvorgangs hinterlegt sind. Die Auswertungseinheit 15 kann über Leitungen oder durch andere Übertragungsmittel mit den einzelnen Sensoren 8, 14, 16 verbunden sein, so dass die von den Sensoren 8, 14, 16 ermittelten Werte zur Auswertungseinheit 15 übertragen werden. Beispielsweise kann die Auswertungseinheit vom Schleppersitz aus per Hand oder automatisch den Streuvorgang überwachen, steuern und regeln.

Des Weiteren ist eine in Umfangsrichtung der Streuscheibe 3 positionierbare Sensoranordnung 19 vorgesehen, um ein Streuprofil von einem durch die Streuscheibe ausgebrachten Massenstrom zu erfassen. Durch den Sensor 19 kann z.B. eine Streubreite des ausgebrachten Massenstroms erfasst werden. Alternativ kann die Sensoranordnung 19 eine Vielzahl von Sensoren umfassen, die um die Streuscheibe 3 in Umfangsrichtung angeordnet sind. Gemäß beispielhaften Ausführungsformen kann die Sensoranordnung 19 wenigstens einen optischen Sensor und/oder wenigstens einen Kraftsensor umfassen. Zusätzlich oder alternativ kann die Sensoranordnung 19 eine Kamera aufweisen. Zusätzlich oder alternativ kann die Sensorvorrichtung 19 eine Radarsensorvorrichtung umfassen. Die Sensoranordnung 19 steht mit der Auswertungseinheit 15 in Verbindung, so dass von der Sensoranordnung 19 erfasste Daten der Auswertungseinheit übermittelt werden können.

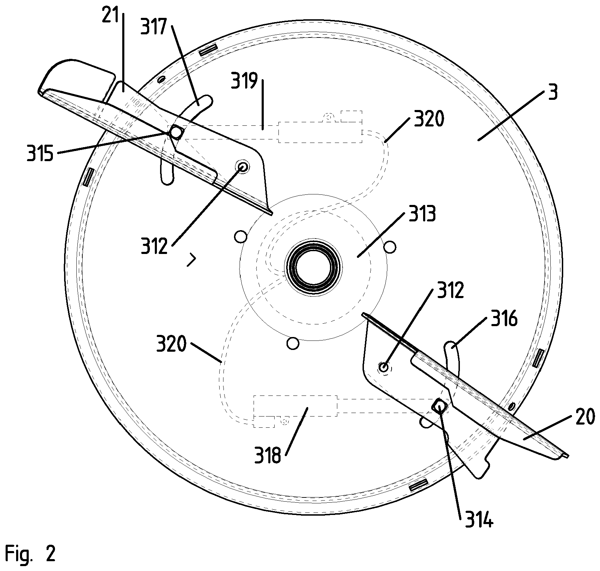

Anhand von Fig. 2 werden beispielhafte Ausgestaltungen der Streuscheibe 3 beschrieben. In Fig. 2 ist die Streuscheibe 3 in Aufsicht schematisch dargestellt. In der dargestellten beispielhaften Ausführungsform sind die Streuschaufeln 20 und 21 jeweils mit einem Bolzen 312 in der Nähe der Nabe 313 der Streuscheibe 3 befestigt. Dabei sind die Streuschaufeln 20 und 21 um die Bolzen 312 winkelverschwenkbar angeordnet. Eine weitere Halterung der Streuschaufeln 20, 21 an der Streuscheibe 3 erfolgt über einen weiteren Bolzen 314 bzw. 315. Die Bolzen 314 und 315 greifen in Langlöcher 316 und 317 ein, die in der Oberfläche der Streuscheibe 3 gebildet sind. Die Langlöcher 316 und 317 stellen daher für die entsprechenden Bolzen 314 und 315 Führungen dar, so dass die Streuschaufeln 20, 21 auf der Oberfläche der Streuscheibe 3 in einem vorgegebenen Winkel zu einer Radialrichtung der Streuscheibe 3 orientierbar und anordbar sind. Zu einer kontrollierten Einstellung einer gewünschten Orientierung und Anordnung können Stellvorrichtungen 318, 319 vorgesehen sein, die an den jeweiligen Bolzen 314 und 315 angreifen können. In einigen beispielhaften Ausführungsformen können die Stellvorrichtungen 318, 319 als elektrisch betätigte Stellmotore ausgebildet sein. Alternativ können die Stellvorrichtungen 318, 319 als handbedienbare Vorrichtungen ausgebildet sein. Über die Stellvorrichtungen 318 und 319 können Orientierungen der Streuschaufeln 20 und 21 während eines Streuvorganges eingestellt werden, um beispielsweise eine Anpassung am Streuprofil vorzunehmen.

In beispielhaften Ausführungsformen, in denen elektrische Stellmotoren vorgesehen sind, kann eine Energieversorgung der Stellmotoren bspw. über Leitungen 320 erfolgen, wie in Fig. 2 dargestellt ist. Die Leitungen 320 können z.B. über eine Art Schleifringeinrichtung 21 mit Strom versorgt werden. Die Stellvorrichtungen 318, 319 können ferner mit einer auf dem Schlepper oder an dem Schleuderdüngerstreuer angeordneten und nicht dargestellten Steuer- oder Regeleinrichtung verbunden sein. Über diese Regeleinrichtung können dann z.B. vom Schleppersitz aus per Hand oder automatisch von der Regeleinrichtung, Orientierungen der Streuschaufeln 20 und 21 auf der Streuscheibe 3 gemeinsam oder getrennt voneinander verändert werden. In einigen beispielhaften Ausführungsformen können die Stellvorrichtungen 318, 319 mit der Auswertungseinheit (vgl. Fig. 1) verbunden und von dieser gesteuert sein.

Es wird angemerkt, dass die anhand von Fig. 2 beschriebenen beispielhaften Ausführungsformen keine Beschränkung der vorliegenden Erfindung darstellen und alternativ die Streuschaufeln 20, 21 durch wenigstens ein Befestigungsmittel (z.B. Bolzen, Nieten etc.) an der Streuscheibe 3 befestigt sein können. Insbesondere kann mindestens eine Streuschaufel 20, 21 ortsfest auf der Streuscheibe 3 angebracht sein.

In allgemeinen Orientierungen sind die Streuschaufeln auf der Streuscheibe nicht radial ausgerichtet angeordnet, insbesondere können die Streuschaufeln derart angeordnet und orientiert sein, dass die Winkelkoordinate in ebenen Polarkoordinaten entlang der Streuscheibe nicht konstant ist, d.h. in ebenen Polarkoordinaten keiner sich radial erstreckenden Fläche oder Kante eine konstante Winkelkoordinate zugeschrieben werden kann. Die Streuschaufeln können also im Allgemeinen in der Oberfläche der Streuscheibe außerradial angeordnet und orientiert sein.

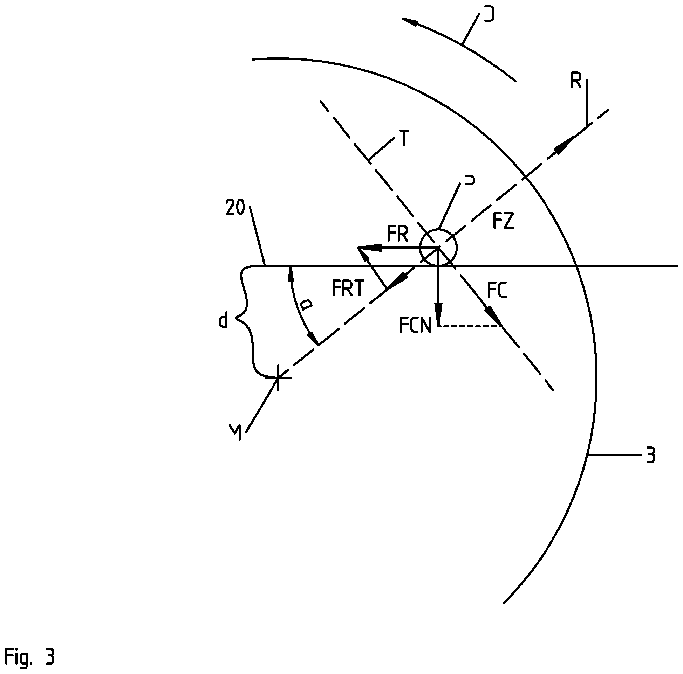

Anhand von Fig. 3 werden im Folgenden die auf ein Partikel eines Streuguts wirkenden Kräfte diskutiert. Fig. 3 stellt eine stark vereinfachte Aufsichtsansicht eines Abschnitts der Streuscheibe 3 in einer vergrößerten Ansicht dar, in der lediglich die Streuschaufel 20 und ein Partikel P eines Streuguts schematisch dargestellt sind. Es wird angemerkt, dass Fig. 3 keine maßstabsgetreue Zeichnung darstellt und insbesondere die in Fig. 3 dargestellten Kräfte nicht maßstäblich gezeichnet sind.

Die Streuschaufel 20 ist auf der Streuscheibe 3 außerradial angeordnet, wobei die Streuschaufel 20 um einen Abstand d von einem Mittelpunkt M (geometrischer Mittelpunkt, aber auch Schnittpunkt der Drehachse mit der Streuscheibe) der Streuscheibe 3 derart beabstandet ist, dass eine zu der Streuschaufel 20 in Fig. 3 parallele Gerade (nicht dargestellt) mit Abstand d zu der Streuschaufel 20 den Mittelpunkt M aufweist. Folglich schneidet eine durch den Schwerpunkt des Partikels P verlaufende radiale Richtung R die Streuschaufel 20 unter einem Winkel a, der durch den radialen Abstand des Partikels zum Mittelpunkt M und durch den Abstand d bestimmt ist.

Bezüglich des Partikels P sind die radiale Richtung R und eine tangentiale Richtung T definiert, die senkrecht zu der radialen Richtung R orientiert ist. Eine Drehrichtung der Streuscheibe 3 wird durch einen Pfeil D bezeichnet. Die Drehung der Streuscheibe 3 erfolgt bei konstanter Winkelgeschwindigkeit, obgleich dies keine Beschränkung der vorliegenden Erfindung darstellt.

Das Partikel P erfährt durch die Drehbewegung der Streuscheibe 3 eine entlang der radialen Richtung wirkende Zentrifugalkraft FZ und eine entlang der tangentialen Richtung T wirkende Corioliskraft FC. Die Corioliskraft FC umfasst eine senkrecht auf die Streuschaufel 20 wirkende Normalenkomponente FCN, die über einen Reibkoeffizienten des Partikels P auf der Streuschaufel 20 einer Reibungskraft FR zugeordnet werden kann, die der Bewegung des Partikels P entlang der Streuschaufel 20 entgegenwirkt. Die Reibungskraft FR lässt sich in eine entlang der radialen Richtung R wirkende radiale Komponente FRR und in eine entlang der tangentialen Richtung T wirkende tangentiale Komponente FRT zerlegen, da die die radiale Richtung R und die Streuschaufel 20 den von 0° verschiedenen Winkel α bilden. Die entlang der tangentialen Richtung wirkenden Kräfte ergeben ein Drehmoment M, das der Streuscheibe 3 zugeführt wird, um das Partikel P entlang der Streuschaufel 20 zu beschleunigen. Wie in Fig. 3 dargestellt, ist ein durch das Partikel P hervorgerufener Beitrag zum Drehmoment proportionale zu (FC-FRT), da FC und FRT zueinander antiparallel orientiert sind. Es ergibt sich also, dass eine außerradial angeordnete Streuschaufel einen von der Reibung abhängigen Beitrag zum Drehmoment liefert. Demgegenüber wirkt die Reibungskraft bei radial angeordneten Streuschaufeln entlang der radialen Richtung und trägt folglich nicht zum Drehmoment bei. Mit zunehmendem Winkel α trägt die Reibung zunehmend zum Drehmoment bei (Winkelabhängigkeit ist proportionale zu sina). Im dargestellten Beispiel verringert die Komponente FRT das Drehmoment, das zum Antrieb der Streuschaufel 20 in Gegenwart des Partikels P erforderlich ist im Vergleich zu einer radial orientierten Streuschaufel.

Die in Fig. 3 dargestellte Orientierung der Streuschaufel stellt keine Beschränkung der vorliegenden Erfindung dar. In einem nicht dargestellten Beispiel kann eine Streuschaufel derart angeordnet sein, dass die Streuschaufel hinsichtlich der in Fig. 3 dargestellten Streuschaufel 20 mit einem Abstand größer d von der Streuschaufel 20 parallel nach unten verschoben ist. Es wird angemerkt, dass in diesem nicht dargestellten Beispiel eine Reibungskraft auf ein Partikel eine tangentiale Komponente ausweisen würde, die zu der Streuschaufel hingerichtet wäre. In dem nicht dargestellten Beispiel würde sich eine Vergrößerung des zum Antrieb der Streuscheibe in Gegenwart eines Partikels erforderlichen Drehmoments gegenüber einer radial orientierten Streuschaufel ergeben.

Die vorliegende Erfindung geht davon aus, dass das Drehmoment zum Antrieb der Streuscheibe 3 abhängig von der Orientierung der Streuschaufel durch die Reibungskraft des Streuguts beeinflusst wird. Unterschiedliche Arten von Streugut, beispielsweise unterschiedliche Arten von Düngemittel, können unterschiedliche Reibkoeffizienten aufweisen und/oder der Reibkoeffizient kann sich abhängig von den Lagerungsbedingungen des Streuguts ändern, so dass die Reibungskraft für unterschiedliche Arten von Streugut verschieden und/oder von den Lagerungsbedingungen abhängen kann. Es wurde also erkannt, dass das Drehmoment zum Antrieb der Streuscheibe 3 in Gegenwart von Streugut nicht mehr nur vom Massenstrom, sondern auch von der Art des Streuguts und/oder den Lagerungsbedingungen abhängt. Bei einer Bestimmung eines Massenstroms von Streugut, das einer Streuscheibe zugeführt wird, durch Messen eines Drehmoments der Streuscheibe und Bestimmen eines Massenstroms aus dem Drehmoment, beispielsweise anhand einer Massenstrom-Drehmoment-Kennlinie oder dergleichen, ohne Berücksichtigung der Art des Streuguts ist im Allgemeinen davon auszugehen, dass ein von einem tatsächlichen Massenstrom abweichender Wert abgeleitet wird.

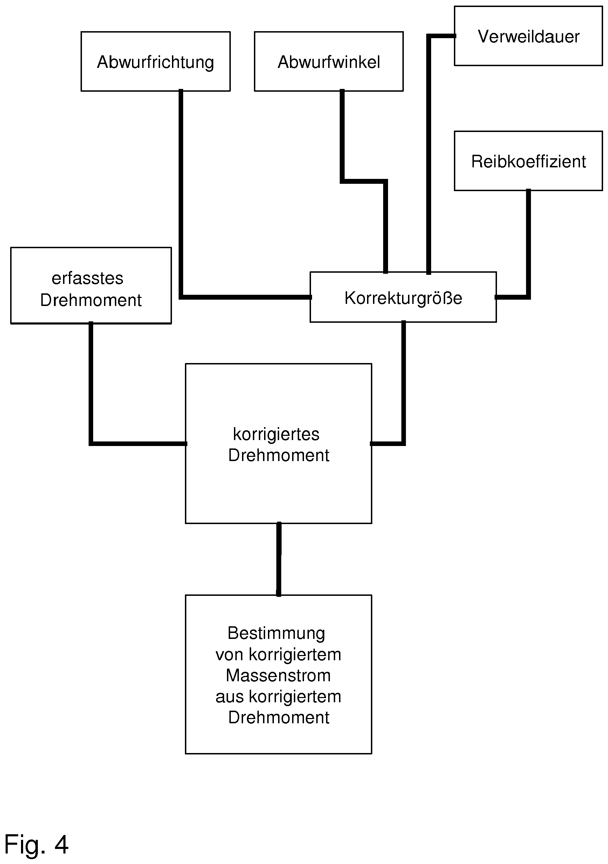

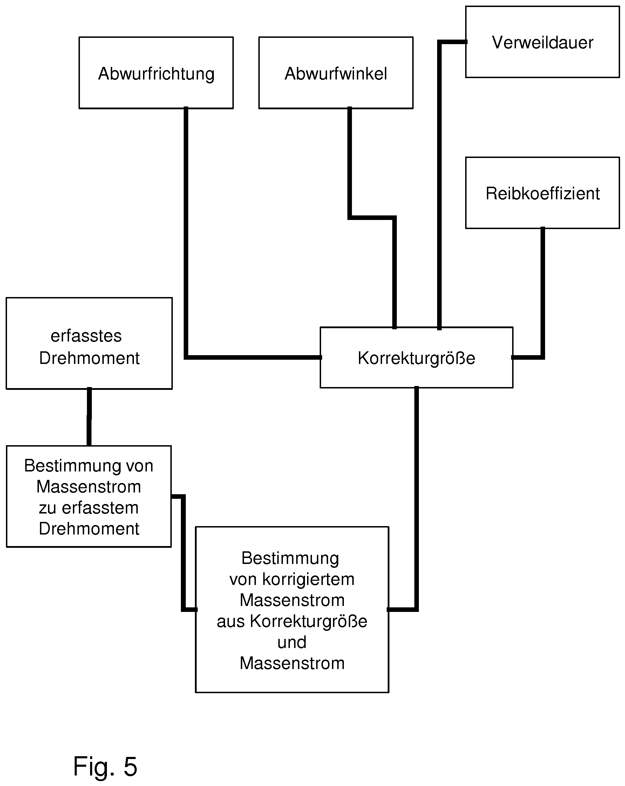

Anhand der Figuren 4 und 5 werden beispielhafte Ausführungsformen der Erfindung beschrieben. Figur 4 stellt schematisch einen Ablauf zum Erfassen eines Massenstroms in einer Streuvorrichtung mit einer Streuscheibe zum Verteilen von einem der Streuscheibe zugeführtem Material gemäß einigen beispielhaften Ausführungsformen der Erfindung dar. Dabei wird ein Drehmoment zum Antrieb der Streuscheibe erfasst. Ferner wird eine Korrekturgröße bestimmt. Auf Grundlage der Korrekturgröße wird das erfasste Drehmoment korrigiert. Ferner wird ein korrigierter Massenstrom auf Grundlage des korrigierten Drehmoments bestimmt. Fig. 5 stellt schematisch einen alternativen Ablauf zum Erfassen eines Massenstroms in einer Streuvorrichtung mit einer Streuscheibe zum Verteilen von einem der Streuscheibe zugeführtem Material gemäß anderer beispielhafter Ausführungsformen der Erfindung dar. Dabei wird ein Drehmoment zum Antrieb der Streuscheibe erfasst, auf dessen Grundlage ein Massenstrom bestimmt wird. Ferner wird eine Korrekturgröße bestimmt. Auf Grundlage der Korrekturgröße wird der auf Grundlage des Drehmoments bestimmte Massenstrom korrigiert und es wird ein korrigierter Massenstrom bestimmt.

Die Korrekturgröße kann dabei auf Basis eines Reibkoeffizienten des Materials auf der Streuscheibe und/oder einer Verweildauer des Materials auf der Streuscheibe und/oder einem Abwurfwinkel des Materials relativ zu einer Zuführrichtung, entlang welcher der Materialstrom der Streuscheibe zugeführt wird, und/oder einer Abwurfrichtung des Materials bestimmt werden. Beispielsweise kann mittels eines Abwurfwinkels, unter dem einen dosierte Menge an Streugut der Streuscheibe zugeführt wird, eine Verweildauer bestimmt werden, auf deren Grundlage die Korrekturgröße bestimmt werden kann.

In einem speziellen Beispiel kann der Reibkoeffizient aus der Verweildauer abgeleitet werden.

In einem speziellen Beispiel kann die Verweildauer aus einem mittleren Abwurfwinkel bestimmt werden. Zum Beispiel kann der mittlere Abwurfwinkel aus einem Maximal im Verlauf des Drehmoments über einem Drehwinkel der Scheibe relativ zu einer Aufbringrichtung bestimmt werden. In einem anderen Beispiel kann die Verweildauer anhand einem oder mehreren Bildern von der auf die Streuscheibe aufgebrachten Streugutmenge aufgenommen durch eine Kamera erhalten werden.

Zusätzlich oder alternativ kann der Reibkoeffizient des Materials auf der Streuscheibe durch Messungen bestimmt werden. Beispielsweise können aus Vergleichsmessungen zum Material des Streuguts hinsichtlich des Materials der Streuscheibe und/oder der Streuschaufeln Werte für einen Reibkoeffizienten des Materials des Streuguts hinsichtlich des Materials der Streuscheibe und/oder der Streuschaufeln bestimmt werden.

Zusätzlich oder alternativ kann eine Abwurfrichtung bestimmt werden. Beispielsweise kann aus einem Streuprofil eine Abwurfrichtung abgeleitet werden, auf deren Grundlage ein Abwurfwinkel bestimmt werden kann. In einem konkreten Beispiel können aus in Umfangsrichtung um die Streuscheibe angeordneten Sensoren bzw. einem in Umfangsrichtung positionierbaren Sensor eine Abwurfrichtung und/oder eine mittlere Abwurfrichtung aus einem maximalen Wert an abgeworfenem Material bestimmt werden.

In einigen beispielhaften Ausführungsformen kann die Korrekturgröße mittels der Auswertungseinheit auf Basis von Tabellen, und/oder Formeln basierend auf theoretischen und/oder empirischen Modellen, und/oder gemessenen und/oder aktualisierten Kennlinien aus dem Reibkoeffizienten und/oder dem Abwurfwinkel und/oder der Abwurfrichtung und/oder der Verweildauer bestimmt werden. In einigen beispielhaften Ausführungsformen wird der Reibkoeffizient aus einer oder mehreren hinterlegten Datenbanken, Tabellen, Erfahrungswerten (z.B. aus vorab durchgeführten Messungen), LUTs, Kennlinien oder dergleichen ausgewählt oder aus theoretischen oder empirischen Modellen ermittelt. Dazu können die den Reibkoeffizient von unterschiedlichem Streugut betreffenden Daten in einem Speicher der Auswertungseinheit (vgl. 15 in Fig. 1) hinterlegt sein, um bei Bedarf abgerufen zu werden. Zum Beispiel gibt ein Bediener der Streuvorrichtung die Art von Streugut in die Auswertungseinheit ein oder wählt das Streugut und den entsprechenden Reibkoeffizienten manuell aus den hinterlegten Daten aus, um den Reibkoeffizienten aus den hinterlegten Daten zu bestimmen.

In einigen beispielhaften Ausführungsformen kann z.B. basierend auf der Korrekturgröße ein Korrekturfaktor bestimmt werden, um eine einfache Korrektur des Drehmoments und/oder des Massenstroms zu erhalten. In einigen Beispielen hierin kann der Korrekturfaktor aus der Korrekturgröße in Abhängigkeit von dem Radius der Streuscheibe und/oder einem Trägheitsmoment der Streuscheibe und/oder der Drehzahl der Streuscheibe und/oder einem Querschnitt des der Streuscheibe zugeführten Materialstroms bestimmt werden, wobei der korrigierte Massenstrom basierend auf dem Korrekturfaktor bestimmt wird.

Es werden eine Streuvorrichtung und ein Verfahren mit einer Bestimmung eines korrigierten Massenstroms bereitgestellt. Hierzu wird ein Drehmoment einer Streuscheibe erfasst, die zum Ausbringen eines Materials vorgesehen ist. Auf Grundlage des erfassten Drehmoments und einer Korrekturgröße basierend auf einem Reibkoeffizienten des Materials auf der Streuscheibe und/oder einer Verweildauer des Materials auf der Streuscheibe und/oder einem Abwurfwinkel des Materials relativ zu einer Zuführrichtung, entlang welcher der Materialstrom der Streuscheibe zugeführt wird, und/oder einer Abwurfrichtung des Materials wird der korrigierte Massenstrom bestimmt.

## Patentansprüche

1. Verfahren zum Erfassen eines Massenstroms in einer Streuvorrichtung mit wenigstens einer Streuscheibe (3) zum Verteilen von der Streuscheibe (3) zugeführtem Material, umfassend:
Antreiben der wenigstens einen Streuscheibe (3), so dass diese um eine Drehachse rotiert;
Zuführen des Materials zu der wenigstens einen rotierenden Streuscheibe (3);
Erfassen eines zum Antrieb der wenigstens einen rotierenden Streuscheibe (3) erforderlichen Drehmoments, **dadurch gekennzeichnet, dass**
das Verfahren ferner umfasst:
Bestimmen einer Korrekturgröße basierend auf einem Reibkoeffizienten des Materials auf der Streuscheibe (3) und/oder einer Verweildauer des Materials auf der Streuscheibe (3) und/oder einem Abwurfwinkel des Materials relativ zu einer Zuführrichtung, entlang welcher der Materialstrom der Streuscheibe (3) zugeführt wird, und/oder einer Abwurfrichtung des Materials; und
Bestimmen eines korrigierten Massenstroms des der Streuscheibe (3) zugeführten Materials auf Grundlage der Korrekturgröße und des erfassten Drehmoments.

2. Verfahren nach Anspruch 1, wobei das Bestimmen des korrigierten Massenstroms ein Bestimmen eines korrigierten Drehmoments auf Grundlage der Korrekturgröße und ein Bestimmen des korrigierten Massenstroms aus dem korrigierten Drehmoment mittels einer bekannten Massenstrom-Drehmoment-Beziehung umfasst.

3. Verfahren nach Anspruch 1, wobei das Bestimmen des korrigierten Massenstroms ein Bestimmen eines Massenstromwerts aus einer bekannten Massenstrom-Drehmoment-Beziehung auf Grundlage des erfassten Drehmoments und ein Korrigieren des Massenstromwerts auf Grundlage der Korrekturgröße umfasst.

4. Verfahren nach einem der Ansprüche 1 bis 3, ferner umfassend ein Bestimmen eines Korrekturfaktors aus der Korrekturgröße in Abhängigkeit von dem Radius der Streuscheibe (3) und/oder einem Trägheitsmoment der Streuscheibe (3) und/oder der Drehzahl der Streuscheibe (3) und/oder einem Querschnitt des der Streuscheibe (3) zugeführten Materialstroms, wobei der korrigierte Massenstrom basierend auf dem Korrekturfaktor bestimmt wird.

5. Verfahren nach einem der Ansprüche 1 bis 4, wobei das Bestimmen der Korrekturgröße ein Erfassen des Reibkoeffizienten und/oder des Abwurfwinkels und/oder der Abwurfrichtung mittels eines Schallsensors und/oder eines Lichtsensors und/oder eines Kraftsensors und/oder einer Videokamera und/oder einer Radarsensorvorrichtung umfasst.

6. Verfahren nach einem der Ansprüche 1 bis 5, wobei das Bestimmen der Korrekturgröße ein Auswählen des Reibkoeffizienten aus einer oder mehreren hinterlegten Datenbanken, Tabellen, Erfahrungswerten oder Kennlinien umfasst.

7. Verfahren nach einem der Ansprüche 1 bis 6, wobei die wenigstens eine Streuscheibe (3) ferner wenigstens eine Streuschaufel (20, 21) aufweist, die mit Bezug auf die Drehachse außerradial angeordnet ist.

8. Streuvorrichtung, umfassend:
wenigstens eine Streuscheibe (3), die zur Drehung um eine Drehachse konfiguriert ist, um ein der wenigstens einen Streuscheibe (3) zugeführtes Material in einem Abwurfwinkelbereich auszubringen;
Drehmomenterfassungsvorrichtung (8), die zum Erfassen eines Drehmoments konfiguriert ist, dass zum Antrieb der wenigstens einen Streuscheibe (3) dieser zugeführt wird;
**dadurch gekennzeichnet, dass**
die Streuvorrichtung ferner umfasst:
Sensorvorrichtung (19), die zum Erfassen von einer Korrekturgröße basierend auf einem Reibkoeffizienten des Materials auf der Streuscheibe (3) und/oder einer Verweildauer des Materials auf der Streuscheibe (3) und/oder einem Abwurfwinkel des Materials relativ zu einer Zuführrichtung, entlang welcher der Streuscheibe (3) der Materialstrom zugeführt wird, und/oder einer Abwurfrichtung des Materials konfiguriert ist; und
elektronische Auswertungseinheit (15), die zum Bestimmen eines korrigierten Massenstroms des der Streuscheibe (3) zugeführten Materials auf Grundlage der Korrekturgröße und des von der Drehmomenterfassungsvorrichtung erfassten Drehmoments konfiguriert ist.

9. Streuvorrichtung nach Anspruch 8, wobei die elektronische Auswertungseinheit (15) zum Bestimmen eines korrigierten Drehmoments auf Grundlage der Korrekturgröße und zum Zugriff auf eine bekannte Massenstrom-Drehmoment-Beziehung konfiguriert ist, um den korrigierten Massenstroms auf Grundlage des korrigierten Drehmoments mittels der bekannten Massenstrom-Drehmoment-Beziehung zu bestimmen.

10. Streuvorrichtung nach Anspruch 8, wobei die elektronische Auswertungseinheit (15) zum Zugriff auf eine bekannte Massenstrom-Drehmoment-Beziehung, zum Bestimmen des korrigierten Massenstroms mittels eines Bestimmen eines Massenstromwerts auf Grundlage der bekannten Massenstrom-Drehmoment-Beziehung und des erfassten Drehmoments und zum Korrigieren des Massenstromwerts auf Grundlage der Korrekturgröße konfiguriert ist.

11. Streuvorrichtung nach einem der Ansprüche 8 bis 10, wobei die elektronische Auswertungseinheit (15) ferner zum Bestimmen eines Korrekturfaktors aus der Korrekturgröße in Abhängigkeit von dem Radius der Streuscheibe (3) und/oder einem Trägheitsmoment der Streuscheibe (3) und/oder der Drehzahl der Streuscheibe (3) und/oder einem Querschnitt des der Streuscheibe (3) zugeführten Materialstroms konfiguriert ist, um den korrigierten Massenstrom auf Grundlage des Korrekturfaktors zu bestimmen.

12. Streuvorrichtung nach einem der Ansprüche 8 bis 11, wobei die elektronische Auswertungseinheit (15) ferner einen Speicher mit einer oder mehreren darin hinterlegten Datenbanken, Tabellen, Erfahrungswerten oder Kennlinien zum Bestimmen der Korrekturgröße auf Grundlage des Reibkoeffizienten umfasst.

13. Streuvorrichtung nach einem der Ansprüche 8 bis 12, wobei die Sensorvorrichtung (19) wenigstens einen Schallsensor und/oder einen Lichtsensor und/oder einen Kraftsensor und/oder eine Videokamera und/oder eine Radarsensorvorrichtung umfasst.

14. Streuvorrichtung nach einem der Ansprüche 8 bis 13, wobei die Streuscheibe (3) wenigstens eine Streuschaufel (20, 21) aufweist, die mit Bezug auf die Drehachse außerradial angeordnet ist.

## Claims

1. Method for detecting a mass flow in a distribution device having at least one spreading disc (3) for distributing material fed to the spreading disc (3), comprising:
driving the at least one spreading disc (3) so that it rotates about a rotational axis;
feeding material to the at least one rotating spreading disc (3);
detecting a torque which is necessary to drive the at least one rotating spreading disc (3),
**characterized in that**
the method also comprises:
determining a correction variable on the basis of a coefficient of friction of the material on the spreading disc (3) and/or a period for which the material is present on the spreading disc (3) and/or an ejection angle of the material relative to a feed direction in which the flow of material is fed to the spreading disc (3), and/or an ejection direction of the material; and
determining a corrected mass flow of the material fed to the spreading disc (3), on the basis of the correction variable and the detected torque.

2. Method according to Claim 1, wherein the determination of the corrected mass flow comprises determining a corrected torque on the basis of the correction variable and determining the corrected mass flow from the corrected torque by means of a known mass flow/torque relationship.

3. Method according to Claim 1, wherein the determination of the corrected mass flow comprises determining a mass flow value from a known mass flow/torque relationship on the basis of the detected torque and correcting the mass flow value on the basis of the correction variable.

4. Method according to one of Claims 1 to 3, also comprising determining a correction factor from the correction variables as a function of the radius of the spreading disc (3) and/or a moment of inertia of the spreading disc (3) and/or the rotational speed of the spreading disc (3) and/or a cross section of the flow of material which is fed to the spreading disc (3), wherein the corrected mass flow is determined on the basis of the correction factor.

5. Method according to one of Claims 1 to 4, wherein the determination of the correction variable comprises detecting the coefficient of friction and/or the ejection angle and/or the ejection direction by means of a sound sensor and/or a light sensor and/or a force sensor and/or a video camera and/or a radar sensor device.

6. Method according to one of Claims 1 to 5, wherein the determination of the correction variable comprises selecting the coefficient of friction from one or more stored databases, tables, experience values or characteristic curves.

7. Method according to one of Claims 1 to 6, wherein the at least one spreading disc (3) also has at least one spreading blade (20, 21) which is arranged outside the radial with respect to the rotational axis.

8. Distribution device comprising:
at least one spreading disc (3) which is configured to rotate about a rotational axis to discharge in an ejection angle range a material which is fed to the at least one spreading disc (3) ;
torque detection device (8) which is configured to detect a torque which is fed to the at least one spreading disc (3) in order to drive it;
**characterized in that**
the distribution device also comprises:
a sensor device (19) which is configured to detect a correction variable on the basis of a coefficient of friction of the material on the spreading disc (3) and/or a period for which the material is present on the spreading disc (3) and/or an ejection angle of the material relative to a feed direction in which the flow of material is fed to the spreading disc (3), and/or an ejection direction of the material; and
electronic evaluation unit (15) which is configured to determine a corrected mass flow of the material fed to the spreading disc (3), on the basis of the correction variable and the torque which is detected by the torque detection device.

9. Distribution device according to Claim 8, wherein the electronic evaluation unit (15) is configured to determine a corrected torque on the basis of the correction variable and to access a known mass flow/torque relationship in order to determine the corrected mass flow on the basis of the corrected torque by means of the known mass flow/torque relationship.

10. Distribution device according to Claim 8, wherein the electronic evaluation unit (15) is configured to access a known mass flow/torque relationship in order to determine the corrected mass flow by means of a determination of a mass flow value on the basis of the known mass flow/torque relationship and the detected torque and to correct the mass flow valve on the basis of the correction variable.

11. Distribution device according to one of Claims 8 to 10, wherein the electronic evaluation unit (15) is also configured to determine a correction factor from the correction variable as a function of the radius of the spreading disc (3) and/or a moment of inertia of the spreading disc (3) and/or the rotational speed of the spreading disc (3) and/or a cross section of the stream flow of the material which is fed to the spreading disc (3), in order to determine the corrected mass flow on the basis of the correction factor.

12. Distribution device according to one of Claims 8 to 11, wherein the electronic evaluation unit (15) also comprises a memory with one or more databases, tables, experience values or characteristic curves stored therein for determining the correction variable on the basis of the coefficient of friction.

13. Distribution device according to one of Claims 8 to 12, wherein the sensor device (19) comprises at least one sound sensor and/or a light sensor and/or a force sensor and/or a video camera and/or a radar sensor device.

14. Distribution device according to one of Claims 8 to 13, wherein the spreading disc (3) has at least one spreading blade (20, 21) which is arranged outside the radial with respect to the rotational axis.

## Revendications

1. Procédé de détection d'un débit massique dans un dispositif d'épandage comportant au moins un disque d'épandage (3) destiné à répartir le matériau fourni par le disque d'épandage (3), consistant à :
entraîner au moins un disque d'épandage (3) de manière à ce qu'il tourne autour d'un axe de rotation ;
délivrer le matériau à l'au moins un disque d'épandage en rotation (3) ;
détecter un couple nécessaire à l'entraînement de l'au moins un disque d'épandage en rotation (3),
**caractérisé en ce que** le procédé consiste en outre à :
déterminer une grandeur de correction sur la base d'un coefficient de frottement du matériau sur le disque d'épandage (3) et/ou d'un temps de séjour du matériau sur le disque d'épandage (3) et/ou d'un angle d'éjection du matériau par rapport à une direction de délivrance le long de laquelle le flux de matériau est délivré au disque d'épandage (3) et/ou à une direction d'éjection du matériau ; et
déterminer un débit massique corrigé du matériau délivré au disque d'épandage (3) sur la base de la grandeur de correction et du couple détecté.

2. Procédé selon la revendication 1, dans lequel la détermination du débit massique corrigé consiste à déterminer un couple corrigé sur la base de la grandeur de correction et à déterminer le débit massique corrigé à partir du couple corrigé au moyen d'une relation connue entre le débit massique et le couple.

3. Procédé selon la revendication 1, dans lequel la détermination du débit massique corrigé consiste à déterminer une valeur de débit massique à partir d'une relation connue entre le débit massique et le couple sur la base du couple détecté et à corriger la valeur du débit massique sur la base de la grandeur de correction.

4. Procédé selon l'une des revendications 1 à 3, consistant en outre à déterminer un facteur de correction à partir de la grandeur de correction en fonction du rayon du disque d'épandage (3) et/ou d'un moment d'inertie du disque d'épandage (3) et/ou de la vitesse de rotation du disque d'épandage (3) et/ou d'une section transversale du flux de matériau délivré au disque d'épandage (3), dans lequel le débit massique corrigé est déterminé sur la base du facteur de correction.

5. Procédé selon l'une des revendications 1 à 4, dans lequel la détermination de la grandeur de correction consiste à détecter le coefficient de frottement et/ou l'angle d'éjection, et/ou la direction d'éjection au moyen d'un capteur acoustique et/ou d'un capteur de lumière et/ou d'un capteur de force et/ou d'une caméra vidéo et/ou d'un dispositif capteur radar.

6. Procédé selon l'une des revendications 1 à 5, dans lequel la détermination de la grandeur de correction consiste à sélectionner le coefficient de frottement parmi une ou plusieurs bases de données, tables, valeurs empiriques ou courbes caractéristiques enregistrées.

7. Procédé selon l'une des revendications 1 à 6, dans lequel l'au moins un disque d'épandage (3) comporte en outre au moins une aube d'épandage (20, 21) qui est disposée de manière non radiale par rapport à l'axe de rotation.

8. Dispositif d'épandage comprenant :
au moins un disque d'épandage (3) configuré pour tourner autour d'un axe de rotation afin d'expulser un matériau délivré à l'au moins un disque d'épandage (3) dans une plage d'angles d'éjection ;
un dispositif de détection de couple (8) configuré pour détecter un couple qui est délivré à l'au moins un disque d'épandage (3) pour l'entraînement de celui-ci ;
**caractérisé en ce que** le dispositif d'épandage comprend en outre :
un dispositif capteur (19) configuré pour détecter une grandeur de correction sur la base d'un coefficient de frottement du matériau sur le disque d'épandage (3) et/ou d'un temps de séjour du matériau sur le disque d'épandage (3) et/ou d'un angle d'éjection du matériau par rapport à une direction de délivrance dans laquelle le flux de matériau est délivré au disque d'épandage (3) et/ou d'une direction d'éjection du matériau ; et
une unité d'évaluation électronique (15) configurée pour déterminer un débit massique corrigé du matériau délivré au disque d'épandage (3) sur la base de la grandeur de correction et du couple détecté par le dispositif de détection de couple.

9. Dispositif de commande selon la revendication 8, dans lequel l'unité d'évaluation électronique (15) est configurée pour déterminer un couple corrigé sur la base de la grandeur de correction et pour accéder à une relation connue entre le débit massique et le couple afin de déterminer le débit massique corrigé sur la base du couple corrigé au moyen de la relation connue entre le débit massique et le couple.

10. Dispositif d'épandage selon la revendication 8, dans lequel l'unité d'évaluation électronique (15) est configurée pour accéder à une relation connue entre le débit massique et le couple, pour déterminer le débit massique corrigé en déterminant une valeur de débit massique sur la base de la relation connue entre le débit massique et le couple et du couple détecté, et pour corriger la valeur du débit massique sur la base de la grandeur de correction.

11. Dispositif d'épandage selon l'une des revendications 8 à 10, dans lequel l'unité d'évaluation électronique (15) est en outre configurée pour déterminer un facteur de correction à partir de la grandeur de correction en fonction du rayon du disque d'épandage (3) et/ou d'un moment d'inertie du disque d'épandage (3) et/ou de la vitesse de rotation du disque d'épandage (3) et/ou d'une section du flux de matériau délivré au disque d'épandage (3) afin de déterminer le débit massique corrigé sur la base du facteur de correction.

12. Dispositif d'épandage selon l'une des revendications 8 à 11, dans lequel l'unité d'évaluation électronique (15) comprend en outre une mémoire contenant une ou plusieurs bases de données, tables, valeurs empiriques ou courbes caractéristiques qui y sont stockées pour déterminer la grandeur de correction sur la base du coefficient de frottement.

13. Dispositif d'épandage selon l'une des revendications 8 à 12, dans lequel le dispositif capteur (19) comprend au moins un capteur acoustique et/ou un capteur de lumière et/ou un capteur de force et/ou une caméra vidéo et/ou un dispositif capteur radar.

14. Dispositif d'épandage selon l'une des revendications 8 à 13, dans lequel le disque d'épandage (3) comporte au moins une aube d'épandage (20, 21) qui est disposée de manière non radiale par rapport à l'axe de rotation.
